# EUROPEAN PATENT SPECIFICATION

(11) **EP 2 319 608 B1**
(45) Date of publication and mention of the grant of the patent: **09.05.2012**
(21) Application number: 10188067.2
(22) Date of filing: 19.10.2010
(51) Int. Cl.: B01D 53/94, F01N 3/20

(54) **Exhaust gas purification apparatus for internal combustion engine**
Abgasreinigungsvorrichtung für einen Verbrennungsmotor
Appareil de purification de gaz d'échappement pour moteur à combustion interne

(30) Priority: 21.10.2009 JP 2009242073
(43) Date of publication of application: 11.05.2011
(73) Proprietor: Kabushiki Kaisha Toyota Jidoshokki, Kariya-shi, Aichi 448-8671 (JP)
(72) Inventor: Yamamoto, Ichiro, Kariya-shi Aichi 448-8671 (JP)
(74) Representative: TBK

(56) References cited:
- EP-A1- 1 783 335
- US-A- 5 628 186
- US-A1- 2007 044 456
- US-A1- 2008 216 467
- US-A1- 2008 271 440
- US-A1- 2009 056 315

## Description

### BACKGROUND OF THE INVENTION

The present invention relates to an exhaust gas purification apparatus for an internal combustion engine.

A nitrogen oxides (NOx) purification apparatus has been known for reducing NOx contained in exhaust gas discharged from an internal combustion engine. In particular, the NOx purification apparatus for a diesel engine uses a selective catalytic reduction (SCR) catalyst in the exhaust system of the diesel engine, in which a reducing agent such as urea is supplied to the SCR catalyst for generating ammonia to be adsorbed on the SCR catalyst, thereby selectively reducing NOx contained in the exhaust gas.

Japanese Patent Application Publication No. 2008 - 274952 discloses an exhaust gas purification apparatus which includes a urea - based SCR catalyst disposed in the exhaust system of an internal combustion engine and a supply device disposed upstream of the SCR catalyst with respect to the exhaust gas flowing direction for supplying urea water as a reducing agent. NOx sensors are provided upstream and downstream of the SCR catalyst respectively. A temperature sensor is coupled to the SCR catalyst for sensing temperature of the SCR catalyst and a heater is coupled to the SCR catalyst to provide heat for regenerating the SCR catalyst. The exhaust gas purification apparatus further includes a control unit configured to adjust operating parameters for regenerating the SCR catalyst.

The control unit estimates the amount of urea related deposit adsorbed on the SCR catalyst in the form of compound, mixture and the like based on the data of the temperature of the SCR catalyst sensed by the temperature sensor and determines whether the amount of adsorbed deposit reaches a threshold for removal of the adsorbed deposit. When it is determined that the amount of adsorbed deposit reaches or exceeds the threshold, the heater is operated to provide heat to decompose the adsorbed deposit for regenerating the SCR catalyst. The heating temperature and time are set in accordance with the amount of the adsorbed deposit.

According to the above Publication, amount of urea water to be supplied may be determined according to a data map prestoring data of engine load, catalyst temperature, exhaust gas temperature and any other parameters representing any engine operating conditions. However, in the apparatus according the above Publication, the amount of urea water to be supplied is determined without considering the amount of ammonia that is finally increased due to the conversion of a part of the adsorbed deposit into ammonia with an increase in the temperature and an elapse of time. In this case, there is a problem that the amount of ammonia becomes excessively large, which may cause a phenomenon known as "ammonia slip" in which unreacted ammonia is emitted into the atmosphere from the SCR catalyst.

US 5 628 186 A discloses an urea based SCR catalyst and a controller for controlling a rate of urea water to be injected into the exhaust gas based on an estimated rate of ammonia desorbed by the catalyst and an estimated rate of ammonia adsorbed by the catalyst. The rates of desorbed and adsorbed ammonia are determined by taking into account a temperature-dependent specific storage capacity of the catalyst for ammonia.

### SUMMARY OF THE INVENTION

The present invention is directed to providing an exhaust gas purification apparatus for an internal combustion engine that reduces the ammonia slip.

The above-mentioned object is achieved by providing an exhaust gas purification apparatus for an internal combustion engine as defined in claim 1. Further developments of the invention are specified in the dependent claims.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view of an exhaust gas purification apparatus according to a first preferred embodiment of the present invention;
Fig. 2 is a flowchart showing a process for reducing NOx performed by the exhaust gas purification apparatus according to the first preferred embodiment;
Fig. 3 is a data map 1 representing a relation between temperature of an SCR catalyst and amount of products converted from urea water supplied into an exhaust passage upstream of the SCR catalyst according to the first preferred embodiment;
Fig. 4 is a data map 2 representing a relation between temperature of the SCR catalyst and amount of products converted from the adsorbed deposit on the SCR catalyst according to the first preferred embodiment; and
Fig. 5 is a schematic view of an exhaust gas purification apparatus according to a second preferred embodiment of the present invention.

### DETAILED DESCRIPTION OF THE PREFERRED EMBODIMENTS

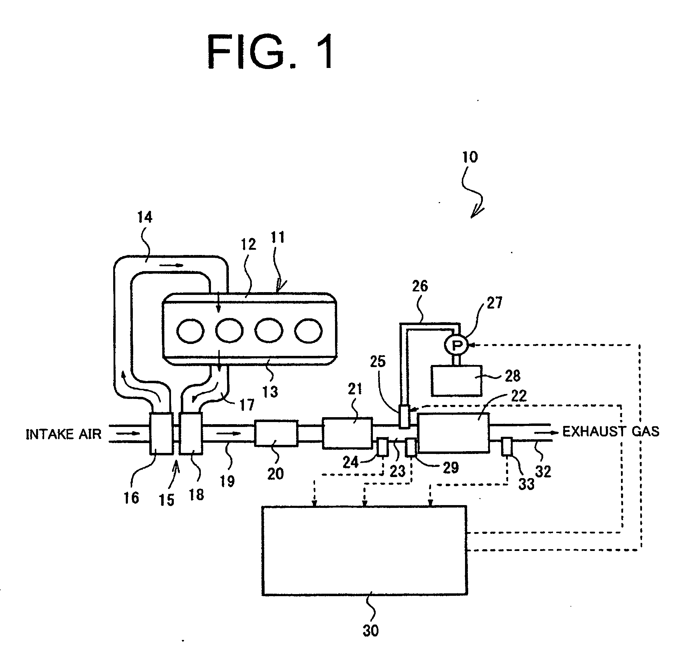

The following will describe the exhaust gas purification apparatus 10 for a diesel engine serving as an internal combustion engine according to the first preferred embodiment with reference to Figs. 1 through 4.

Referring to Fig. 1, the diesel engine (hereinafter referred to as engine) 11 includes an intake manifold 12 and an exhaust manifold 13. The intake manifold 12 is connected to the outlet of a compressor 16 of a turbocharger 15 through an intake duct 14. The compressor 16 is connected at the inlet thereof to an air cleaner (not shown). The exhaust manifold 13 is connected to the inlet of an exhaust turbine 18 of the turbocharger 15 through an exhaust duct 17 and the outlet of the exhaust turbine 18 is connected to an exhaust passage 19. Exhaust gas discharged from the engine 11 flows through the exhaust turbine 18 into the exhaust passage 19.

The exhaust passage 19 is provided with an oxidation catalyst (DOC) 20 having function of oxidizing carbon monoxide (CO) contained in exhaust gas and nitrogen monoxide (NO) contained in exhaust gas. The DOC 20 uses a precious metal such as platinum. A diesel particulate filter (DPF) 21 is disposed downstream of the DOC 20 with respect to the flowing direction of exhaust gas for capturing and collecting particulate matter contained in exhaust gas.

The SCR catalyst 22 for selectively reducing NOx contained in exhaust gas is disposed downstream of the DPF 21 with respect to the flowing direction of exhaust gas. The SCR catalyst 22 uses an ammonia adsorption type Fe zeolite having a high NOx reducing rate under low temperature. A NOx sensor 24 is provided in an exhaust pipe 23, which is a part of the exhaust passage 19, located upstream of the SCR catalyst 22 with respect to the flowing direction of exhaust gas for sensing the amount of NOx contained in exhaust gas upstream of the SCR catalyst 22. Another NOx sensor 33 is provided in an exhaust pipe 32, which is a part of the exhaust passage 19, located downstream of the SCR catalyst 22 with respect to the flowing direction of exhaust gas for sensing the amount of NOx contained in exhaust gas downstream of the SCR catalyst 22. A urea water supply valve 25 serving as a urea water supply device is provided in the exhaust pipe 23 and connected to a urea water tank 28 through a supply pipe 26 and a pump 27. Urea water stored in the urea water tank 28 is pumped by the pump 27 to be supplied from the urea water supply valve 25 into the exhaust gas flowing through the exhaust pipe 23. The supplied urea water is hydrolyzed thereby to generate ammonia (NH₃) that is to be adsorbed on the SCR catalyst 22 for selectively reducing NOx contained in the exhaust gas.

A temperature sensor 29 for sensing temperature of the SCR catalyst 22 is provided in the exhaust pipe 23. The NOx sensor 24, the temperature sensor 29, the urea water supply valve 25 and the pump 27 are connected to a control unit 30 that controls the operation of the exhaust gas purification apparatus 10. The control unit 30 is operable to control the urea water supply valve 25 to supply urea water into the exhaust passage 19 and estimates amount of NH₃ converted from adsorbed deposit having a property of being converted to NH₃ on the SCR catalyst 22 during a predetermined interval after a urea water supply. Also the control unit 30 estimates amount of adsorbed deposit remaining on the SCR catalyst 22 which has not been converted to NH₃ and has a property of being converted to NH₃, and amount of adsorbed deposit having no property of being converted to NH₃ converted from the adsorbed deposit having a property of being converted to NH₃ on the SCR catalyst 22 during the predetermined interval after a urea water supply. The above amounts of converted products are estimated on the basis of temperature of the SCR catalyst 22 as one of physical quantities representing engine operating conditions. It is noted that the above " predetermined interval " corresponds to time T1 at which a processing routine for reducing NOx is repeated, which will be described later.

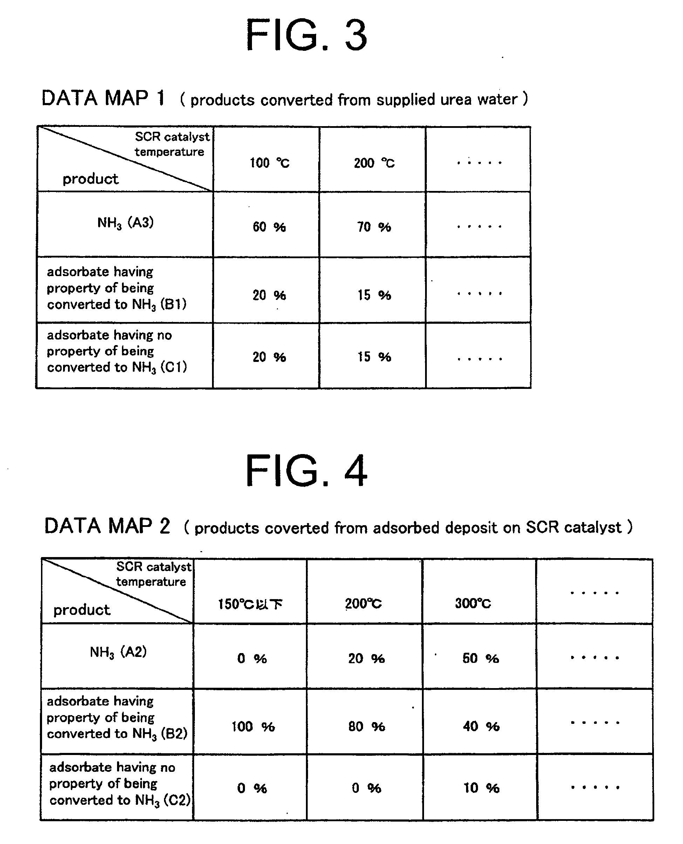

The control unit 30 stores therein the data map 1 of Fig. 3 as a first conversion data and the data map 2 of Fig. 4 as a second conversion data. The data map 1 represents the relation between temperature of the SCR catalyst 22 and amount of products converted from supplied urea water. For example, when the amount of supplied urea water is A0 under the temperature at 200 degrees Celsius (°C) of the SCR catalyst 22, 70 % of the supplied urea water A0 is converted to NH₃ (A3), 15 % of the supplied urea water A0 is adsorbed on the SCR catalyst 22 as deposit which has not been converted to NH₃ having a property of being converted to NH₃ (B1), and 15 % of the supplied urea water A0 is adsorbed on the SCR catalyst 22 as adsorbed deposit having no property of being converted to NH₃ (C1) during the predetermined interval. That is, the relations of A0 to A3, A0 to B1 and A0 to C1 are expressed by equations A3 = 0.7 - A0, B1 =0.15 A0, and C1 =0.15 A0, respectively.

The amount of NH₃ converted from the supplied urea water during the predetermined interval after the urea water supply is varied according to not only the temperature of the SCR catalyst 22, but also the amount or concentration of the urea water, the pressure in exhaust pipes and other conditions. Thus, each conversion ratio of the data map 1 is set in consideration of the amount or concentration of the adsorbed deposit on the SCR catalyst 22, pressures in exhaust pipes, as well as the temperature.

The data map 2 represents the relation between temperature of the SCR catalyst 22 and amount of products converted from the adsorbed deposit on the SCR catalyst 22. For example, when the amount of the adsorbed deposit having a property of being converted to NH₃ is B0 under the temperature at 300°C of the SCR catalyst 22, 50 % of the adsorbed deposit B0 is converted to NH₃ (A2), 40 % of the adsorbed deposit B0 remains on the SCR catalyst 22 as adsorbed deposit which has not been converted to NH₃ and has a property of being converted to NH₃ during the predetermined interval (B2), and 10 % of the adsorbed deposit B0 is converted to adsorbed deposit having no property of being converted to NH₃ on the SCR catalyst 22 (C2). That is, the relations of B0 to A2, B0 to B2 and B0 to C2 are expressed by equations A2 = 0.5 · B0, B0, B2 = 0.4 · B0, and C2 = 0.1 · B0, respectively.

The amount of NH₃ converted from the adsorbed deposit having a property of being converted to NH₃ on the SCR catalyst 22 during the predetermined interval after the urea water supply is varied according to not only the temperature, but also the amount or concentration of any by-product, pressures in exhaust pipes and other conditions. Thus, each conversion ratio of the data map 2 is set in consideration of the amount or concentration of the adsorbed deposit, pressures in exhaust pipes, as well as the temperature.

The adsorbed deposit having a property of being converted to NH₃. includes solid or molten urea, biuret, isocyanic acid and the like which are easily generated on the SCR catalyst 22 under low temperature. Such a deposit is able to be converted to NH₃ by remaining on the SCR catalyst 22 for a certain length of time or longer under a certain temperature or higher. In case that when the temperature of the SCR catalyst 22 is below 100 °C, urea water is adsorbed on the SCR catalyst 22 as deposit having a property of being converted to NH₃.

The adsorbed deposit having no property of being converted to NH₃ includes cyanuric acid, ammeride, ammerine, melamine, urea related compounds, any substances attached to inside walls of the exhaust passage 19 without reaching the SCR catalyst 22, and urea water slipped out from the SCR catalyst 22.

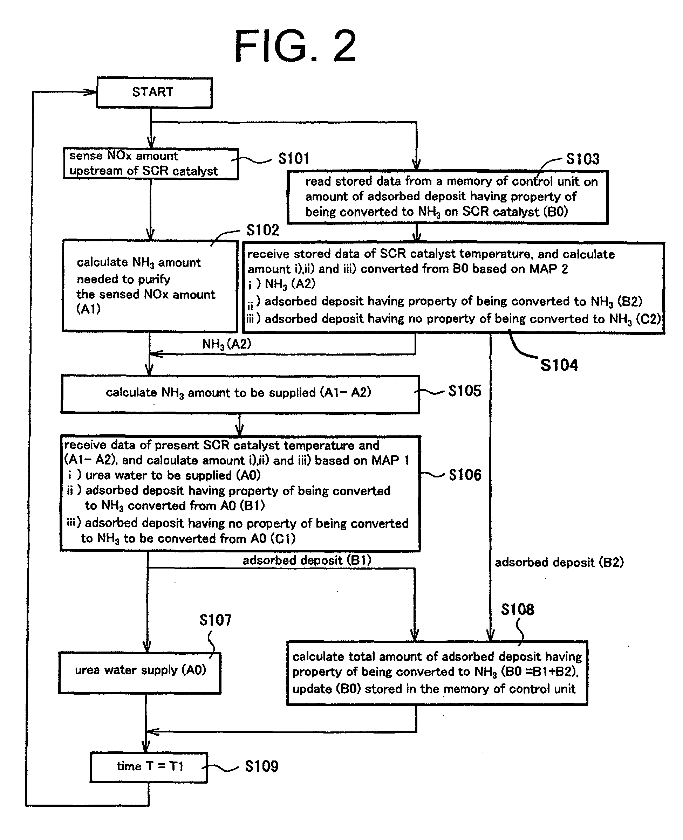

The following will describe the process for reducing NOx contained in exhaust gas with reference to the flowchart shown in Fig. 2. The processing routine is performed repeatedly at the time T1.

At step S101 after the start of the processing routine, the control unit 30 receives sensed signals from the NOx sensor 24 for calculating the amount of NOx contained in the exhaust gas flowing upstream of the SCR catalyst 22 through the exhaust pipe 23 with respect to the flowing direction of the exhaust gas. At step S102, the control unit 30 calculates the amount of NH₃ enough to purify the amount of NOx calculated at S101. The amount of NH₃ ,which is needed to purify the amount of NOx sensed by the NOx sensor 24, calculated at S 102 is referred to as A1.

Steps S103 to S104 are performed in parallel with steps S101 to S102. At step S103, the control unit 30 reads the data of the remained amount of adsorbed deposit having a property of being converted to NH₃ on the SCR catalyst 22 from a memory thereof that is referred to as B0. The data B0 is obtained in the calculation of the last processing cycle and stored in the memory of the control unit 30. Then, at the step S104, the control unit 30 receives the data of the temperature of the SCR catalyst 22 that is sensed by the temperature sensor 29 from the last calculation until the present calculation and stored as a historical data. The control unit 30 calculates the amount of NH₃ converted from the adsorbed deposit B0 during the predetermined interval after a urea water supply (A2), the amount of adsorbed deposit remaining on the SCR catalyst 22 which has not converted to NH₃ having a property of being converted to NH₃ during the predetermined interval after the urea water supply (B2), and the amount of adsorbed deposit having no property of being converted to NH₃ converted from the adsorbed deposit B0 during the predetermined interval after the urea water supply (C2) while referring to the temperature data by using the map 2 of Fig. 4 prestored in the control unit 30.

At step S105, the amount of NH₃ to be supplied is calculated by subtracting the value A2 obtained at step S104 from the value A1 obtained at step S102. In other words, the amount of NH₃ to be supplied (A1 - A2) is calculated in consideration of the amount of NH₃ converted from the adsorbed deposit remaining on the SCR catalyst 22 (A2).

At step S106, the control unit 30 receives the data of the amount of NH₃ to be supplied (A1 - A2) obtained at S105 and the data of temperature of the SCR catalyst 22 sensed by the temperature sensor 29. Then, the control unit 30 calculates the amount of urea water to be supplied that is referred to as A0, the amount of adsorbed deposit having a property of being converted to NH₃ (B1) on the SCR catalyst 22 converted from the supplied urea water A0 during the predetermined interval after the urea water supply, and the amount of adsorbed deposit having no property of being converted to NH₃ (C1) converted from the urea water A0 while referring to the temperature data by using the data map 1 of Fig. 3 prestored in the control unit 30.

According to the data map 1 of Fig. 3, when the amount of supplied urea water is A0, the amount of NH₃ converted from supplied urea water (A3) is expressed by the equation A3 = 0.7 · A0. The amount of NH₃ converted from supplied urea water (A3) is substantially equal to the amount of NH₃ to be supplied (A1 - A2). Therefore, 0.7 · A0 = A1 - A2, and hence the amount of urea water to be supplied (A0) is obtained by an equation A0 = (A1 -A2) / 0.7. Further, according to the data map 1, the relations of A0 to B1 and A0 to C1 are expressed by the equations B1 = 0.15 · A0 and C1 = 0.15 · A0, respectively.

At step 107, the control unit 30 drives the pump 27 and controls the operation of the urea water supply valve 25 in such a way that the urea water supply valve 25 is opened for a predetermined time so as to supply the urea water in the amount of A0 calculated by the equation A0 = (A1 - A2) / 0.7.

On the other hand, at step S108, the total amount of adsorbed deposit having a property of being converted to NH₃ (B0) is calculated by adding the amount of the adsorbed deposit B2 calculated at step S104 to the amount of the adsorbed deposit B1 calculated at step S106 (B1 + B2). The value obtained by (B1 + B2) updates the data on the amount of adsorbed deposit having a property of being converted to NH₃ (B0) stored in the memory of the control unit 30 for utilizing to determine next amount of urea water supply.

After present time T elapses to T1 corresponded to the predetermined interval at step S109, the processing returns to the start for the next processing cycle from S101 to S108. The above process for reducing NOx is repeated automatically at the predetermined intervals according to a program stored in the memory of the control unit 30.

The exhaust gas purification apparatus 10 of the first embodiment offers the following advantageous effects.
(1) The amount of NH₃ needed to purify the NOx (A1) is calculated based on the sensed amount of NOx contained in the exhaust gas flowing upstream of the SCR catalyst 22. Then, the amount of NH₃ converted from the adsorbed deposit having a property of being converted to NH₃ during the predetermined interval (A2) is subtracted from the (A1) to obtain the amount of NH₃ to be supplied (A1 -A2). That is, the amount of NH₃ to be supplied (A1 -A2) is determined in consideration of the amount of NH₃ converted from the adsorbed deposit having a property of being converted to NH₃ during the predetermined interval. Thus, the amount of urea water to be supplied is accurately estimated and ammonia slip from the SCR catalyst 22 is reduced.
(2) The control unit 30 stores therein the data map 1 representing the relation between temperature of the SCR catalyst 22 and the products converted from supplied urea water. Thus, the control unit 30 can estimate the amount of NH₃ to be converted from the supplied urea water during the predetermined interval based on the temperature of the SCR catalyst 22 by using the data map 1.
(3) The control unit 30 stores therein the data map 2 representing the relation between temperature of the SCR catalyst 22 and the products converted from adsorbed deposit on the SCR catalyst 22. Thus, the control unit 30 can estimate the amount of NH₃ to be converted from the adsorbed deposit having a property of being converted to NH₃ during the predetermined interval based on the temperature of the SCR catalyst 22 by using the data map 2.

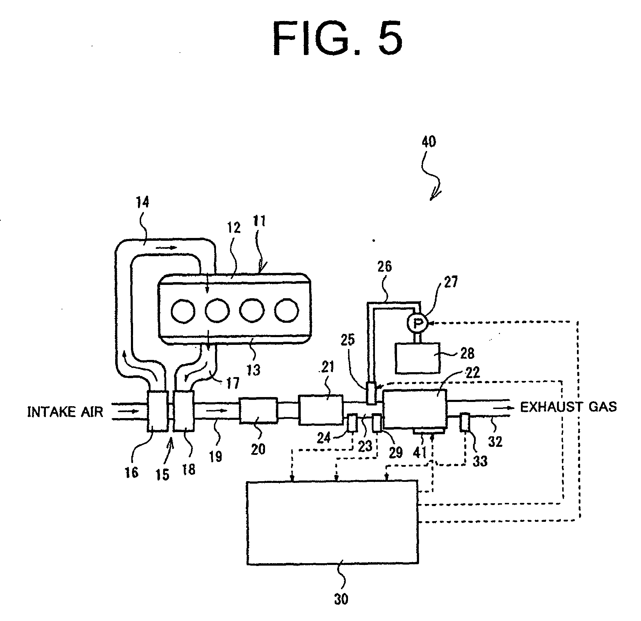

The following will describe the exhaust gas purification apparatus 40 according to the second preferred embodiment of the present invention with reference to Fig. 5. The second preferred embodiment differs from the first preferred embodiment in that a heater 41 is provided in the SCR catalyst 22 for raising temperature of the SCR catalyst 22. For the sake of convenience of explanation, therefore, like or same parts or elements will be referred to by the same reference numerals as those which have been used in the first preferred embodiment, and the description thereof will be omitted.

As shown in Fig. 5, the SCR catalyst 22 is provided with the heater 41 connected to the control unit 30. The control unit 30 calculates the amount of NH₃ converted from the adsorbed deposit having a property of being converted to NH₃ during a predetermined interval after a urea water supply by using the data map 2. When it is determined that the temperature of the SCR catalyst 22 is not high enough for the adsorbed deposit having a property of being converted to NH₃ to be actually converted to NH₃, the control unit 30 turns ON the heater 41 for raising the temperature of the SCR catalyst 22. Thus, the control unit 30 is operable to increase the amount of NH₃ converted from the adsorbed deposit having a property of being converted to NH₃ and also to prevent the adsorbed deposit having a property of being converted to NH₃ from being deposited on the SCR catalyst 22. The calculation is done in consideration of the increased NH₃ by the additional heat from the heater 41 based on the data map 2 and the value A2 is obtained. Consequently, the amount of NH₃ to be supplied (A1 -A2) is calculated in view of such data based on the data map 2 and eventually the amount of urea water to be supplied (A0) is figured out by calculation.

When the temperature of the SCR catalyst 22 is maintained under a low level, a large amount of adsorbed deposit may be deposited on the SCR catalyst 22, which may clog the SCR catalyst 22. In such a case, the heater 41 is turned ON to raise the temperature of the SCR catalyst 22 for a predetermined length of time, thereby removing the adsorbed deposit from the SCR catalyst 22 to regenerate the SCR catalyst 22. Other advantageous effects are the same as those of the first embodiment and, therefore, the explanation thereof is omitted.

The present invention is not limited to the above-described embodiments, but may be modified into various alternative embodiments, as exemplified below.

According to the first preferred embodiment, the temperature of the SCR catalyst 22 is directly sensed by the temperature sensor 29 coupled to the exhaust pipe 23. Alternatively, the temperature of the SCR catalyst 22 may be estimated based on the temperatures sensed by temperature sensors provided in the DPF 21 and the like. Further, the temperature of the SCR catalyst 22 may be estimated from the engine combustion state which may be estimated from measurable data of the engine state such as amount of fuel injection, engine speed, air flow rate measured by an air flow meter. Still further, the temperature of the SCR catalyst 22 may be estimated based on the amount of adsorbed deposit on the SCR catalyst 22.

In order to meet the requirement of rapid controlling for NOx amount changing every moment, the cycle of the processing routine, or the predetermined interval at which the processing routine for reducing NOx is repeated needs to be a short time, for example, in the range from a few to a hundred milliseconds. The range of temperature change of the SCR catalyst 22 is so small, for example, 1°C or less, that the data of temperature of the SCR catalyst 22 to be inputted to the control unit 30 may be the average of stored data.

According to the first preferred embodiment, the amount of NOx is directly sensed by the NOx sensor 24. Alternatively, the amount of NOx may be indirectly estimated based on the measurable data of the engine such as amount of fuel injection, engine speed, air flow rate measured by an air flow meter.

Oxidation catalyst (DOC) may be disposed downstream of the SCR catalyst 22 with respect to the flowing direction of exhaust gas for oxidizing NH₃.

The heater 41 used as a heating device for raising the temperature of the SCR catalyst 22 of the second preferred embodiment may be replaced by other heating device such as a burner, a radio-frequency heating unit, and any other suitable devices.

## Claims

1. An exhaust gas purification apparatus (10, 40) for an internal combustion engine, comprising:
an exhaust passage (19) through which exhaust gas discharged from the internal combustion engine (11) is allowed to flow;
a selective catalytic reduction catalyst (22) provided in the exhaust passage (19);
a urea water supply device (25) provided upstream of the selective catalytic reduction catalyst (22) in the exhaust passage (19) with respect to the flowing direction of exhaust gas for supplying urea water into the exhaust passage (19);
a temperature sensor (29) for sensing the temperature of the selective catalytic reduction catalyst (22); and
a control unit (30) for controlling an amount of urea water to be supplied into the exhaust passage (19) at predetermined intervals, wherein
the control unit (30) stores therein a first data representing a relation between the temperature of the selective catalytic reduction catalyst (22) and the amount of ammonia converted from the supplied urea water during the predetermined interval and a second data representing a relation between the temperature of the selective catalytic reduction catalyst (22) and the amount of ammonia converted from adsorbed deposit during the predetermined interval, wherein the adsorbed deposit is converted from the urea water and adsorbed on the selective catalytic reduction catalyst (22), and
the control unit (30) estimates the amount of ammonia converted from the adsorbed deposit based on the second data and determines the amount of urea water to be supplied into the exhaust passage (19) based on the first data and the estimated amount of ammonia converted from the adsorbed deposit on the selective catalytic reduction catalyst (22),
**characterized in that**
the first data further comprises a relation between the temperature of the selective catalytic reduction catalyst (22) and an amount of adsorbed deposit which is to be converted from the supplied urea water during the predetermined interval and has a property of being converted to ammonia, wherein the control unit (30) adds the first data to the second data and stores the second data for utilizing to determine a next amount of urea water supply.

2. The exhaust gas purification apparatus (10, 40) according to claim 1, **characterized in that** the selective catalytic reduction catalyst (22) is provided with a heater (41) connected to the control unit (30) for raising the temperature of the selective catalytic reduction catalyst (22), wherein the control unit (30) controls the heating temperature of the heater (41) based on the second data.

3. The exhaust gas purification apparatus (10, 40) according to claim 1 or 2, **characterized in that** the second data further comprises a relation between the temperature of the selective catalytic reduction catalyst (22) and an amount of adsorbed deposit which has not been converted to the ammonia during the predetermined interval after the urea water supply and has a property of being converted to ammonia, wherein the control unit (30) updates and stores the amount of adsorbed deposit of the second data for utilizing to determine the next amount of urea water supply.

4. The exhaust gas purification apparatus (10, 40) according to any one of claims 1 through 3, further comprising a nitrogen oxide sensor (24) for sensing an amount of nitrogen oxide in the exhaust gas flowing through the exhaust passage (19), **characterized in that** the control unit (30) determines the amount of ammonia needed to purify the sensed amount of nitrogen oxide and determines the amount of urea water to be supplied into the exhaust passage (19) based on the amount of ammonia needed to purify the sensed amount of nitrogen oxide.

5. The exhaust gas purification apparatus (10, 40) according to claim 4, **characterized in that** the control unit (30) determines the amount of urea water to be supplied into the exhaust passage (19) based on an amount of ammonia which is the estimated amount of ammonia converted from the adsorbed deposit during the predetermined interval subtracted from the amount of ammonia needed to purify the sensed amount of nitrogen oxide.

## Patentansprüche

1. Abgasreinigungsvorrichtung (10, 40) für einen Verbrennungsmotor, mit:
einem Abgaskanal (19), durch den Abgas, das vom Verbrennungsmotor (11) abgegeben wird, strömen gelassen wird;
einem Katalysator zur selektiven katalytischen Reduktion (22), der in dem Abgaskanal (19) vorgesehen ist;
einer Harnstoffwasser-Zufuhreinrichtung (25), die im Abgaskanal (19) bezüglich der Abgasströmungsrichtung stromaufwärts von dem Katalysator zur selektiven katalytischen Reduktion (22) vorgesehen ist, um in den Abgaskanal (19) Harnstoffwasser zuzuführen;
einem Temperaturfühler (29) zum Abfühlen der Temperatur des Katalysators zur selektiven katalytischen Reduktion (22); und
einer Steuerungseinheit (30) zur Steuerung einer Menge an Harnstoffwasser, die zu vorbestimmten Intervallen in den Abgaskanal (19) zuzuführen ist, wobei
die Steuerungseinheit (30) in sich einen ersten Datensatz, der eine Beziehung zwischen der Temperatur des Katalysators zur selektiven katalytischen Reduktion (22) und der Menge an Ammoniak darstellt, die während des vorbestimmten Intervalls aus dem zugeführten Harnstoffwasser umgewandelt wird, und einen zweiten Datensatz speichert, der eine Beziehung zwischen der Temperatur des Katalysators zur selektiven katalytischen Reduktion (22) und der Menge an Ammoniak darstellt, die während des vorbestimmen Intervalls aus adsorbierten Ablagerungen umgewandelt wird, wobei die adsorbierten Ablagerungen aus dem Harnstoffwasser umgewandelt und auf dem Katalysator zur selektiven katalytischen Reduktion (22) adsorbiert werden, und
die Steuerungseinheit (30) die Menge an Ammoniak, die aus den adsorbierten Ablagerungen umgewandelt wird, beruhend auf dem zweiten Datensatz abschätzt und die Menge an Harnstoffwasser, die in den Abgaskanal (19) zuzuführen ist, beruhend auf dem ersten Datensatz und der abgeschätzten Menge an Ammoniak bestimmt, die auf dem Katalysator zur selektiven katalytischen Reduktion (22) aus den adsorbierten Ablagerungen umgewandelt wird,
**dadurch gekennzeichnet, dass**
der erste Datensatz außerdem eine Beziehung zwischen der Temperatur des Katalysators zur selektiven katalytischen Reduktion (22) und einer Menge an adsorbierten Ablagerungen umfasst, die während des vorbestimmten Intervalls aus dem zugeführten Harnstoffwasser umzuwandeln ist und die Eigenschaft hat, in Ammoniak umgewandelt zu werden, wobei die Steuerungseinheit (30) den ersten Datensatz zu dem zweiten Datensatz hinzuaddiert und den zweiten Datensatz speichert, um ihn zum Bestimmen einer nächsten Menge an Harnstoffwasserzufuhr zu nutzen.

2. Abgasreinigungsvorrichtung (10, 40) nach Anspruch 1, **dadurch gekennzeichnet, dass** der Katalysator zur selektiven katalytischen Reduktion (22) mit einer Heizung (41) versehen ist, die mit der Steuerungseinheit (30) verbunden ist, um die Temperatur des Katalysators zur selektiven katalytischen Reduktion (22) zu erhöhen, wobei die Steuerungseinheit (30) die Heiztemperatur der Heizung (41) beruhend auf dem zweiten Datensatz steuert.

3. Abgasreinigungsvorrichtung (10, 40) nach Anspruch 1 oder 2, **dadurch gekennzeichnet, dass** der zweite Datensatz außerdem eine Beziehung zwischen der Temperatur des Katalysators zur selektiven katalytischen Reduktion (22) und einer Menge an adsorbierten Ablagerungen umfasst, die nach der Harnstoffwasserzufuhr während des vorbestimmten Intervalls nicht in das Ammoniak umgewandelt worden ist und die Eigenschaft hat, in Ammoniak umgewandelt zu werden, wobei die Steuerungseinheit (30) die Menge an adsorbierten Ablagerungen des zweiten Datensatzes aktualisiert und speichert, um sie zum Bestimmen der nächsten Menge an Harnstoffwasserzufuhr zu nutzen.

4. Abgasreinigungsvorrichtung (10, 40) nach einem der Ansprüche 1 bis 3, mit außerdem einem Stickoxidfühler (24) zum Abfühlen einer Menge an Stickoxid in dem Abgas, das durch den Abgaskanal (19) strömt, **dadurch gekennzeichnet, dass** die Steuerungseinheit (30) die Menge an Ammoniak bestimmt, die zum Reinigen der abgefühlten Menge an Stickoxid benötigt wird, und die Menge an Harnstoffwasser, die in den Abgaskanal (19) zuzuführen ist, beruhend auf der Menge an Ammoniak bestimmt, die zum Reinigen der abgefühlten Menge an Stickoxid benötigt wird.

5. Abgasreinigungsvorrichtung (10, 40) nach Anspruch 4, **dadurch gekennzeichnet, dass** die Steuerungseinheit (30), die Menge an Harnstoffwasser, die in den Abgaskanal (19) zuzuführen ist, beruhend auf einer Menge an Ammoniak bestimmt, die die abgeschätzte Menge an Ammoniak, die während des vorbestimmten Intervalls aus den adsorbierten Ablagerungen umgewandelt wird, abgezogen von der Menge an Ammoniak ist, die zum Reinigen der abgefühlten Menge an Stickoxid benötigt wird.

## Revendications

1. Appareil de purification de gaz d'échappement (10, 40) pour un moteur à combustion interne, comprenant :
un passage d'échappement (19) à travers lequel les gaz d'échappement déchargés du moteur à combustion interne (11) peuvent circuler ;
un catalyseur (22) de réduction catalytique sélective prévu dans le passage d'échappement (19) ;
un dispositif d'alimentation en urée-eau (25) prévu en amont du catalyseur (22) de réduction catalytique sélective dans le passage d'échappement (19) par rapport à la direction de circulation des gaz d'échappement pour alimenter l'urée-eau dans le passage d'échappement (19) ;
un capteur de température (29) pour détecter la température du catalyseur (22) de réduction catalytique sélective ; et
une unité de commande (30) pour commander une quantité d'urée-eau à alimenter dans le passage d'échappement (19) dans des intervalles prédéterminés, où
l'unité de commande (30) stocke des premières données représentant une relation entre la température du catalyseur (22) de réduction catalytique sélective et la quantité d'ammoniac transformé de l'urée-eau alimentée pendant l'intervalle prédéterminé et des deuxièmes données représentant une relation entre la température du catalyseur (22) de réduction catalytique sélective et la quantité d'ammoniac transformé d'un dépôt adsorbé pendant l'intervalle prédéterminé, où le dépôt adsorbé est transformé de l'urée-eau et adsorbé sur le catalyseur (22) de réduction catalytique sélective, et
l'unité de commande (30) estime la quantité d'ammoniac transformée du dépôt adsorbé sur la base des deuxièmes données et détermine la quantité d'urée-eau à alimenter dans le passage d'échappement (19) sur la base des premières données et la quantité estimée d'ammoniac transformé du dépôt adsorbé sur le catalyseur (22) de réduction catalytique sélective,
**caractérisé en ce que**
les premières données comprennent en outre une relation entre la température du catalyseur (22) de réduction catalytique sélective et une quantité de dépôt adsorbé devant être transformée de l'urée-eau alimentée pendant l'intervalle prédéterminé et qui possède la propriété d'être transformable en ammoniac, où l'unité de commande (30) ajoute les premières données aux deuxièmes données et stocke les deuxièmes données à utiliser pour déterminer une quantité suivante d'alimentation en urée-eau.

2. Appareil de purification d'un gaz d'échappement (10, 40) selon la revendication 1, **caractérisé en ce que** le catalyseur (22) de réduction catalytique sélective est doté d'un dispositif de chauffage (41) relié à l'unité de commande (30) pour élever la température du catalyseur (22) de réduction catalytique sélective, où l'unité de commande (30) commande la température de chauffage du dispositif de chauffage (41) sur la base des deuxièmes données.

3. Appareil de purification d'un gaz d'échappement (10, 40) selon la revendication 1 ou 2, **caractérisé en ce que** les deuxièmes données comprennent en outre une relation entre la température du catalyseur (22) de réduction catalytique sélective et une quantité de dépôt adsorbé qui n'a pas été transformé en ammoniac pendant l'intervalle prédéterminé après l'alimentation en urée-eau et qui possède la propriété d'être transformable en ammoniac, où l'unité de commande (30) met à jour et stocke la quantité de dépôt adsorbé des deuxièmes données à utiliser pour déterminer la quantité suivante d'alimentation en urée-eau.

4. Appareil de purification d'un gaz d'échappement (10, 40) selon l'une quelconque des revendications 1 à 3, comprenant en outre un capteur d'oxyde d'azote (24) pour détecter une quantité d'oxyde d'azote dans les gaz d'échappement circulant à travers le passage d'échappement (19), **caractérisé en ce que** l'unité de commande (30) détermine la quantité d'ammoniac nécessaire pour purifier la quantité détectée de l'oxyde d'azote et détermine la quantité d'urée-eau à alimenter dans le passage d'échappement (19) sur la base de la quantité d'ammoniac nécessaire pour purifier la quantité détectée de l'oxyde d'azote.

5. Appareil de purification d'un gaz d'échappement (10, 40) selon la revendication 4, **caractérisé en ce que** l'unité de commande (30) détermine la quantité d'urée-eau à alimenter dans le passage d'échappement (19) sur la base d'une quantité d'ammoniac qui est la quantité estimée de l'ammoniac transformé du dépôt adsorbé pendant l'intervalle prédéterminé soustraite de la quantité d'ammoniac nécessaire pour purifier la quantité détectée d'oxyde d'azote.
